# EUROPÄISCHE PATENTSCHRIFT

(11) **EP 1 428 083 B1**
(45) Veröffentlichungstag und Bekanntmachung des Hinweises auf die Patenterteilung: **12.12.2007**
(21) Anmeldenummer: 02769930.5
(22) Anmeldetag: 07.09.2002
(51) Int. Cl.: G05B 19/042

(54) **VERFAHREN ZUR STEUERUNG UND/ODER REGELUNG VON INDUSTRIELLEN PROZESSEN**
METHOD FOR CONTROLLING AND/OR REGULATING INDUSTRIAL PROCESSES
PROCEDE DE COMMANDE ET/OU DE REGULATION DE PROCESSUS INDUSTRIELS

(30) Priorität: 12.09.2001 DE 10144987
(43) Veröffentlichungstag der Anmeldung: 16.06.2004
(73) Patentinhaber: Bosch Rexroth AG, 70184 Stuttgart (DE)
(72) Erfinder: PATZ, Kai-Uwe, 97082 Würzburg (DE); LORASCH, Jürgen, 97816 Lohr am Main (DE); MÜLLER, Frank, 63639 Flörsbachtal 1 (DE); KUEHNLEIN, Georg, 97762 Hammelburg (DE); BRUNNER, Reinhard, 01159 Dresden (DE); IHLING, Matthias, 01237 Dresden (DE)
(74) Vertreter: Thürer, Andreas
(86) Internationale Anmeldenummer: PCT/DE2002/003324
(87) Internationale Veröffentlichungsnummer: WO 2003/023527

(56) Entgegenhaltungen:
- EP-A- 0 372 726
- EP-A- 0 903 654
- WO-A-96/33450
- US-B1- 6 226 559

## Beschreibung

Die Erfindung betrifft ein Verfahren zur Steuerung und/oder Regelung von industriellen Prozessen, welches auf einer Hardware-Plattform abläuft. Dies kann beispielsweise ein PC, insbesondere ein HMI (Human Machine Interface) bzw. ein Industrie-PC sein. Zur Implementierung der Echtzeitfähigkeit ist auf der Hardware-Plattform neben dem nicht echtzeitfähigen Standard-Betriebssystem noch ein Echtzeitmodul für die Steuerungs- und/oder Regelungsvorgänge in Echtzeit vorhanden oder auf der Hardware-Plattform ist ein Echtzeit-Betriebssystem implementiert.

Auf einer Hardware-Plattform können - neben oder unter dem Echtzeitmodul oder dem Echtzeit-Betriebssystem - auch Nicht-Echtzeitanwendungen ablaufen bzw. aktiv sein. Diese sind gleichzeitig zu dem genannten Modul bzw. zu dem genannten Echtzeit-Betriebssystem aktiv. Das bedeutet, dass der Nicht-Echtzeit-Anwendung eine entsprechende Laufzeit, d.i. insbesondere ein Anteil an einem Betriebssystemzyklus, zugewiesen sein sollte.

Hierzu ist es bekannt, dass der Betriebszyklus eines Standard-Betriebssystems durch eine Interrupt-Steuerung, die beispielsweise den Interrupt-Scheduler beaufschlagt, in einen Echtzeitanteil und einen Nicht-Echtzeitanteil unterteilt ist. Es ist ferner bekannt, die Zeitanteile des Betriebszyklus, die jeweils auf Echtzeit und Nicht-Echtzeit entfallen, an dem Betriebszyklus fest zuzuweisen.

Ein solches Verfahren ist vergleichsweise wenig flexibel, da es nicht an alle für industrielle Prozesse regelmäßig erforderlichen, insbesondere auch - je nach dem zu steuernden/zu regelnden Prozess unterschiedlichen - Echtzeitanforderungen in einem konsistenten System anzupassen ist. Insbesondere wird bei dem genannten Verfahren die jeweilige Steuerung/Regelung jeweils unterschiedlicher industrieller Prozesse zur Verwendung der jeweiligen Echtzeitanwendungen mit Kapazitätsanforderungen belastet. Hinzu kommt, dass die vorhandenen Kapazitäten der Steuerungs- und/oder Regelungssysteme schlecht ausgenutzt sind, insbesondere bei komplexen Prozessen, wie diese in der industriellen Fertigung und/oder Bearbeitung regelmäßig auftreten,

Es ist daher Aufgabe der vorliegenden Erfindung, bezüglich aller regelmäßig in industriellen Prozessen auftretender Steuerungs- und/oder Regelungsanforderungen eine bessere Kapazitätsausnutzung und insbesondere eine bessere Effizienz der beteiligten Steuerungs- und/oder Regelungssysteme herbeizuführen, wobei trotzdem eine einfache Durchführung, insbesondere Bedienung und Steuerung des Verfahrens bzw. ein Eingriff in das Verfahren durch den Benutzer möglich ist.

Die Erfindung bietet ein an moderne Steuerungs- und/oder Regelungsanforderungen angepasstes Verfahren, welches ein bezüglich der betreffenden Steuerungs- und/oder Regelungssysteme übergeordnetes Taskmanagement bietet, so dass eine Entlastung der Steuerungs- und/oder Regelungssysteme von solchen proprietären Taskmanagement-Aufgaben erfolgt.

Dieser Vorteil wird dadurch erreicht, dass mehrere, zumindest zwei Echtzeitanwendungen mit - vorzugsweise jeweils - charakteristischen Echtzeitanforderungen unter dem Echtzeitmodul bzw. unter dem Echtzeit-Betriebssystem aktiv sind. Dabei sind die Echtzeitanforderungen einer jeden Echtzeitanwendung durch die zu steuernden und/oder zu regelnden industriellen Prozesse vorgegeben. Zur Materialbearbeitung in Werkzeugmaschinen sind beispielsweise i.d.R. höhere Echtzeitanforderungen, d.h. insbesondere kleinere Zeitkonstanten und größere Zeitanteile der erforderlichen CPU-/Abarbeitungszeit hinsichtlich der Anwendung gegeben als beispielsweise bei einfachen Transfer- oder einfachen Detektionsaufgaben wie beispielsweise Endschaltern etc.

Diese regelmäßig bei industriellen Prozessen, beispielsweise Bearbeitungsprozessen, wie z.B. in Werkzeugmaschinen, oder Produktionsprozessen, wie z.B. in der Automatisierungstechnik, beim Handling, bei Druckmaschinen oder bei Werkzeug- und Verpackungsmaschinen auftretenden Anforderungen an ein Steuerungsverfahren werden durch die Erfindung flexibel erfüllt. Dabei werden die eigentlichen Steuerungs- und/oder Regelungsverfahren, beispielsweise die Satzbearbeitung in einer NC, von solchen Taskmanagement-Aufgaben entlastet, wodurch eine höhere Effizienz erreicht wird. Unabhängig von Implementierungsänderungen der Applikationen der einzelnen Echtzeitanwendungen bleibt das Verhalten der jeweils unveränderten Echtzeitanwendung (-en) deterministisch und unbeeinflusst.

Zudem können für einen spezifischen, industriellen Prozess an einer Maschine oder beispielsweise an einer Produktionsstraße die jeweils charakteristischen Echtzeitanforderungen in dem Verfahren genauer und flexibler abgebildet werden; dies erfolgt dadurch, dass ein Zuweisungsmodul vorhanden ist, welches jeder der Echtzeitanwendungen jeweils prozessorientiert und individuell einen entsprechenden maximal verfügbaren Zeit-(Anteil) an einem maximal verfügbaren Echtzeitanteil an einem Betriebszyklus zuweist. Dadurch ist eine wesentlich genauere Zuweisung der Rechenleistung, d.h. insbesondere der entsprechenden, für die jeweilige Echtzeitanwendung zur Verfügung stehenden Abarbeitungszeit in einem Betriebszyklus möglich. Dadurch kann - entweder statisch oder dynamisch, siehe unten - die jeweilige Anlage wesentlich genauer modelliert und die entsprechenden Anforderungen an die Performance der Anlage wesentlich besser und genauer erfüllt werden. Durch die prozessorientierte, genauere Modellierung der Rechenzeitaufteilung hinsichtlich der unterschiedlichen Echtzeitanwendungen kann die vorhandene Rechnerleistung effizienter genutzt werden.

Bevorzugte Ausgestaltungen der vorliegenden Erfindung sind in den Unteransprüchen angegeben.

Der maximal verfügbare Anteil jeder Echtzeitanwendung kann einstellbar sein und/oder statisch zugeordnet werden. Diese Zuordnung kann während der Inbetriebnahme, bei einer Umrüstung oder auch während des Betriebs, d.h. während des betreffenden industriellen Prozesses, vorgenommen werden. Dadurch ist eine sehr hohe Anpassungsflexibilität des Verfahrens gegeben, so dass eine Steuerung und/oder Regelung mit dem erfindungsgemäßen Verfahren für eine Vielzahl von industriellen Prozessen jeweils im voraus oder während der Laufzeit vorgenommen werden kann. Dies bedeutet, dass die Zuordnung des maximal verfügbaren Anteils während mehrerer Betriebszyklen konstant ist, insbesondere für die Laufzeit eines industriellen Prozesses konstant gehalten wird und i.d.R. lediglich dann verändert wird, wenn umzurüsten ist oder wenn sich die Anforderungen an die Steuerung und/oder Regelung in sonstiger Weise ändern. Hierzu wird vorzugsweise vorgeschlagen, dass anhand eines Probedurchlaufs oder mehrerer Probedurchläufe der maximal verfügbare Anteil adaptiv ermittelt wird. Dadurch wird die Ausnutzung der vorhandenen Kapazitäten unter Berücksichtigung der beteiligten Prozesse optimiert.

Das Zuweisungsmodul kann die Zuordnung der Anteile aber auch während der Laufzeit der Echtzeitanwendungen veränderbar halten, so dass beispielsweise durch manuelle Eingabe eines Benutzers die entsprechende Zuweisung geändert werden kann. Dies ermöglicht eine - auch nachträgliche - Anpassung der Anteilszuweisung der Echtzeitanwendungen untereinander.

Ebenso kann der maximal verfügbare Anteil der Echtzeitanwendungen bedarfsgerecht automatisch während der Laufzeit der Echtzeitanwendungen dynamisch zugewiesen werden. Damit reagiert ein solches Verfahren automatisch auf Änderungen in den Anforderungen, insbesondere im Rechenzeitbedarf der unterschiedlichen Echtzeitanwendungen. Dies kann beispielsweise dann auftreten, wenn sich Produktionsbedingungen ändern, z.B. wenn die Produktionsgeschwindigkeit erhöht oder verringert wird etc.

Die Erfindung deckt bereits die meisten der auftretenden Anforderungen in solchen industriellen Prozessen ab, wenn jeweils eine Echtzeitanwendung betreffend SPS-Funktionalität/SPS-Teilprozess und eine Echtzeitanwendung betreffend NC-Funktionalität/NC-Teilprozess vorgesehen sind. Die Erfindung hat erkannt, dass die unterschiedlichen Anforderungen, insbesondere Echtzeitanforderungen von SPS-Funktionalitäten und NC-Funktionalitäten eine Abbildung in dem zugrunde liegenden Taskmanagement äußerst vorteilhaft werden lassen. Diese Zuweisung kann bedarfsgerecht und prozessorientiert erfolgen, so dass nicht unbedingt immer ein größerer Anteil der NC-Zeit vorgesehen sein muss. Je nach Konfiguration der entsprechenden Anlage oder des entsprechenden Anlagenteils können die Anteile variieren, so dass beispielsweise auch ein größerer Zeitanteil für die zugrunde liegende SPS-Funktionalität vorgesehen werden kann.

Als Standard-Betriebssystem kann beispielsweise ein Embedded-Betriebssystem vorgesehen sein. Dann können die entsprechenden Funktionen bzw. Module (Echtzeitmodul, Zuweisungsmodul) in dem Standard-Betriebssystem implementiert sein oder werden.

Die Zuweisung kann auch bezüglich der entsprechenden Geräte zur Steuerung- und/oder Regelung separat, d.h. remote erfolgen. Dann ist das entsprechende Gerät von der Software und/oder Hardware zur erfindungsgemäßen Zuweisung entlastet und die separate EDV-Anlage muss lediglich in die Hardware-Plattform, insbesondere über einen Direktanschluss mittels einer Schnittstelle oder über einen Netzwerkanschluss angeschlossen werden.

Die Erfindung wird anhand von in den Figuren dargestellten Ausführungsbeispielen näher erläutert. Es zeigen:
Figur 1 eine schematische Darstellung von erfindungswesentlichen Funktionseinheiten, die derart zusammenwirken, dass sich ein erfindungsgemäßes Steuerungs- und/oder Regelungsverfahren für einen industriellen Prozess ergibt,
Figur 2 eine schematische Darstellung des Zuweisungsverfahrens gemäß der vorliegenden Erfindung anhand eines Ausschnitts aus einer Abfolge von Betriebszyklen,
Figur 3 eine Schiebereglerkonfiguration für die erfindungsgemäße Zuweisung, die sich von derjenigen der Figur 3 durch die Konfiguration der Schieberegler unterscheidet, Figur 4 ein Prioritätsdiagramm der Nicht-Echtzeit-Tasks und der Echtzeit-Tasks mit entsprechender Einordnung des Standard-Betriebssystems und des Zuweisungsmoduls.

Sofern im Folgenden nichts anderes gesagt ist, beziehen sich sämtliche Bezugszeichen stets auf alle Figuren.

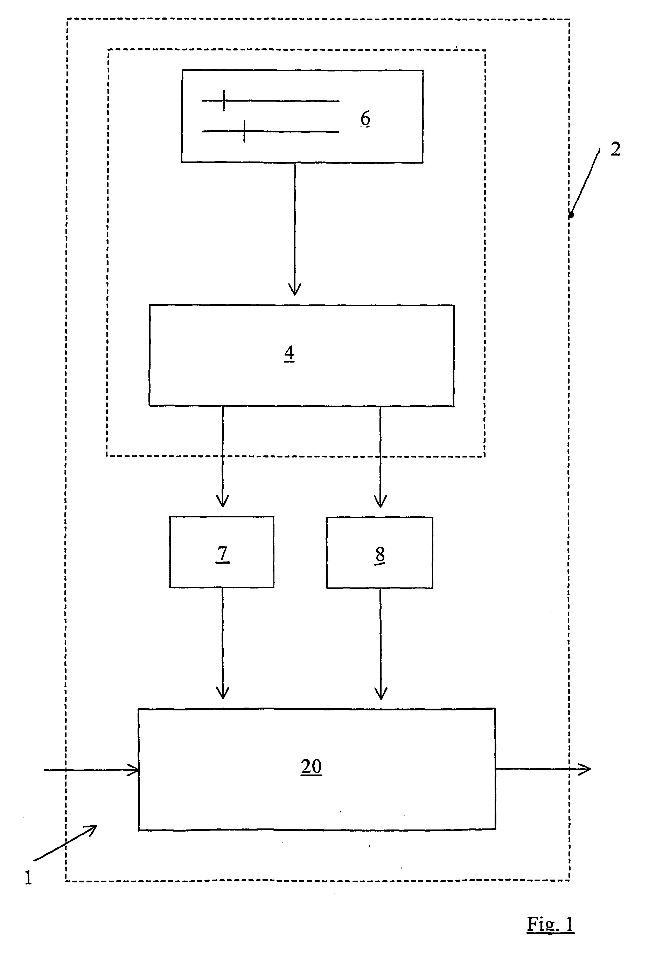

Figur 1 zeigt die Zusammenwirkung von erfindungswesentlichen Funktionseinheiten zur Durchführung des Verfahrens zur Steuerung und/oder Regelung von industriellen Prozessen, wie oben beschrieben. Die Darstellung ist der Übersichtlichkeit halber lediglich symbolisch. Der zu regelnde, industrielle Prozess 1 hat einen Teilprozess 20, der hier mittels des erfindungsgemäßen Verfahrens gesteuert und/oder geregelt wird. Wesentlich ist, dass der zu regelnde Teilprozess 20 aus weiteren (hier nicht im einzelnen gezeigt) Teilprozessen zusammengesetzt ist, wobei die weiteren Teilprozesse die Anwendung zweier unterschiedlicher Echtzeitanwendungen erforderlich oder sinnvoll machen. Beispielsweise kann für einfache Handlingaufgaben, z.B. die Zufuhr von Werkstücken oder die Förderung von Flächenmaterial eine SPS-Echtzeitanwendung verwendet werden. Zusätzlich kann beispielsweise eine Bearbeitung von Werkstücken erforderlich sein, die eine CNC/NC-Echtzeitanwendung erfordert. Dies kann beispielsweise ein Werkzeugmaschinenteil sein. Jede der Echtzeitanwendungen 7,8 hat - aufgrund der zu steuernden/zu regelnden Prozesse charakteristische Echtzeitanforderungen, denen durch das erfindungsgemäße Verfahren Rechnung getragen wird. Echtzeitanforderungen sind somit durch die maßgeblichen Zeitkonstanten der Prozesse festgelegt, wozu auch die Genauigkeit der Zeitpunkterfassung bzw. von Start- und Stopzeiten sowie die entsprechenden, erfindungsgemäß zugewiesenen und erforderlichen Zeitanteile zählen. Hier sind ein Einstellmodul 6 und ein Zuweisungsmodul 4 zu einer funktionalen Einheit zusammengefasst. Nachdem mittels eines Einstellmoduls 6 die Aufteilung der Zeitanteile (siehe weiter unten) vorgenommen wurde, kommuniziert das Einstellmodul 6 mit dem Zuweisungsmodul 4. Das Zuweisungsmodul 4 erhält die Zeitvorgaben und weist daraufhin jeder der Echtzeitanwendungen 7,8 eine entsprechende maximale Laufzeit zu. Mit dieser Laufzeit wird der Teilprozess 20 gesteuert/geregelt, so dass eine jeweils optimale bzw. gegenüber dem Stand der Technik verbesserte, individuelle Zeitzuweisung stattfindet, die der Charakteristik der (insbesondere unterschiedlichen) Echtzeitanforderungen gerecht wird. Die Echtzeitanforderungen der unterschiedlichen Echtzeitanwendungen 7,8 können auch praktisch gleich sein.

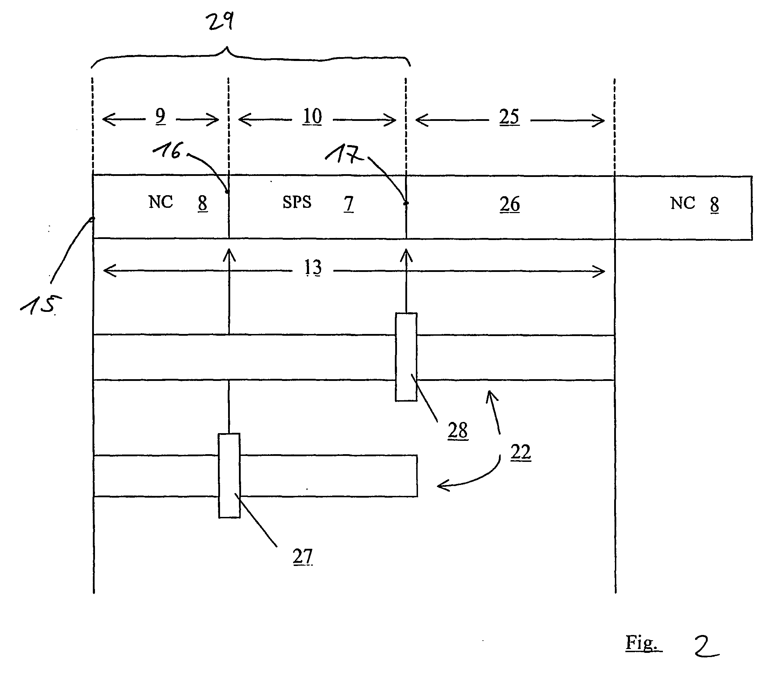

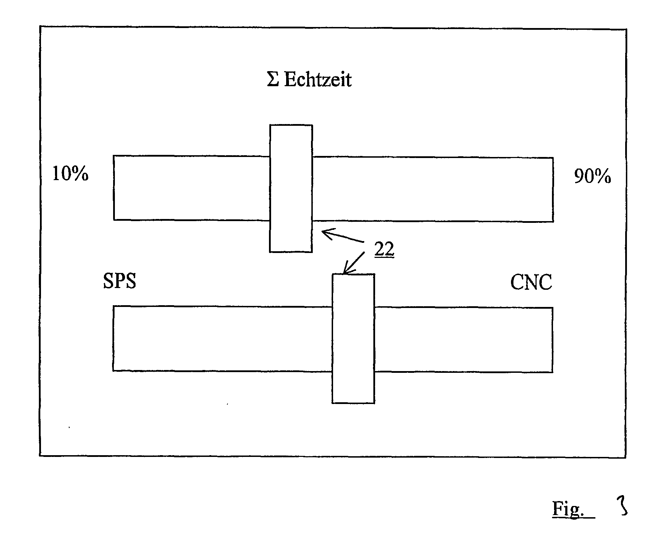

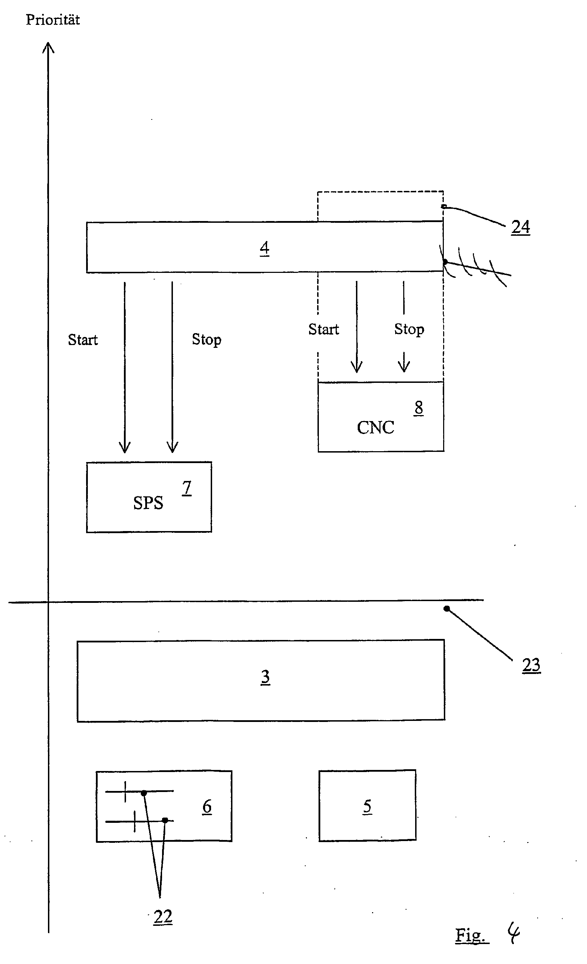

Figur 2 zeigt schematisch eine Möglichkeit der erfindungsgemäßen Zuweisung von Zeitanteilen 9,10 an einem Betriebszyklus 13. Die Zeitdauer eines Betriebszyklus 13 ist derart ausgewählt, dass sie von der Hardware-Plattform 2 standardmäßig verwaltet werden kann und den Timing-Anforderungen und Zyklusdauern der entsprechenden Echtzeitanforderungen gerecht wird. Der Echtzeitanteil 29 an einem Betriebszyklus 13 wird - hier symbolisch dargestellt - durch die Stellung des Schiebereglers 28 für die Echtzeit- / Nicht-Echtzeit-Aufteilung vorgegeben. Damit ist der prinzipiell für die Echtzeitanwendungen 7,8 verfügbare Anteil festgelegt. Einer instruktiven Darstellung halber ist der Einstellbereich für den Schieberegler 27 für die Aufteilung der Zykluszeit zwischen den Echtzeitanwendungen 7,8 durch die Stellung des Schiebereglers 28 vorbestimmt. Nach der gezeigten Stellung ist für die Echtzeitanwendung 8 (hier eine NC-Anwendung) der NC-Zeitanteil 9 verfügbar und für die SPS-Echtzeitanwendung 7 der entsprechende Zeitanteil 10. Die Zeitanteile 9,10 sind hier nach Maßgabe der Prozessanforderungen bzw. der jeweiligen Steuerungs- und/oder Regelungsanforderungen unterschiedlich. Eine praktisch optimale oder eine vorteilhafte Aufteilung der entsprechenden Zeitdauern bzw. Zyklusanteilen kann beispielsweise vorab durch einen Probelauf ermittelt oder durch eine Simulation der entsprechenden Anlage, die den betreffenden Teilprozess 20 ausführt, festgestellt werden. Eine andere Möglichkeit der übersichtlichen Bedienung ist in Figur 3 gezeigt. Hier ist ein Schieberegler vorgesehen für die Aufteilung zwischen Echtzeit- und Nicht-Echtzeitanwendungen 7,8, hier bezeichnet mit Sigma (Summe) Echtzeit. Dieser Schieberegler gibt die Einstellung für den Echtzeitanteil 29 an einem Betriebszyklus 13. Dieser hat eine Obergrenze und eine Untergrenze, hier 10 bzw. 90%.

Der untere Schieberegler dient zur Aufteilung der Zeitanteile 9,10 der einzelnen Echtzeitanwendungen 7,8 an dem durch den oberen Schieberegler gegebenen Echtzeitanteil 29 an einem Betriebszyklus 13.

Schließlich zeigt Figur 4 eine Klassifizierung der entsprechenden Module bzw. Funktionseinheiten anhand ihrer Priorität. Die Grenze 23 zwischen Nicht-Echtzeitpriorität und Echtzeitpriorität ist hier lediglich schematisch angegeben. Auf der Nicht-Echtzeit-Ebene liegt das Standard-Betriebssystem 3. Auch die - beispielsweise manuelle - Einstellung durch das Einstellmodul 6 mittels der Schieberegler 22 erfolgt auf Nicht-Echtzeit-Ebene. Des weiteren können unter dem Standard-Betriebssystem 3 noch Nicht-Echtzeitanwendungen 5 laufen. In Echtzeit-Priorität sind die SPS-Echtzeitanwendungen 7 und die CNC-Anwendung 8 angesiedelt. In besonderen Anwendungsfällen kann es vorkommen, dass die Priorität der Echtzeit-Anwendung 8 (CNC) oberhalb der Priorität des Zuweisungsmoduls 4 liegt. In der Regel hat das Zuweisungsmodul 4 aber eine höhere Priorität als die Echtzeit-Anwendungen 7,8. Dies dient der Erhaltung eines deterministischen Verhaltens der Steuerung und/oder Regelung. Das Zuweisungsmodul 4 generiert entsprechende Start- und Stopsignale für die Echtzeit-Anwendungen 7,8, zu den entsprechenden Zeitpunkten 14,15,16 (s. Fig. 2) die zyklisch in einem Betriebszyklus 13 die entsprechenden Start- und Stopzeiten für die entsprechenden Anwendungen zuweisen.

### Bezugszeichenliste

- 1: Industrieller Prozess (schematisch)
- 2: Hardware-Plattform
- 3: Standard-Betriebssystem
- 4: Zuweisungsmodul
- 5: Nicht-Echtzeit-Anwendung
- 6: Einstellmodul
- 7: SPS-Echtzeit-Anwendung
- 8: NC-Echtzeit-Anwendungen
- 9: NC-Zeitanteil
- 10: SPS-Zeitanteil
- 13: Zeitdauer eines Betriebszyklus
- 14: Startzeit eines Betriebszyklus, entsprechend NC-Startzeit
- 15: NC-Stopzeit entsprechend SPS-Startzeit
- 16: SPS-Stopzeit entsprechend Nicht-Echtzeit-Startzeit
- 20: Teilprozess des industriellen Prozesses
- 21: Nicht-Echtzeit-Zyklus
- 22: Schieberegler
- 23: Nicht-Echtzeit-/Echtzeitprioritätslimit
- 24: Möglicher Prioritätsbereich
- 25: Nicht-Echtzeit-Zeitanteil
- 26: Nicht-Echtzeit-Zeitanteil
- 27: Schieberegler für Echtzeitaufteilung
- 28: Schieberegler für Echtzeit-Nicht-Echtzeitaufteilung
- 29: Echtzeitanteil

## Patentansprüche

1. Verfahren zur Steuerung und/oder Regelung von industriellen Prozessen (1,20), wobei auf einer Hardware-Plattform (2) ein Standard-Betriebssystem (3) mit Echtzeitmodul oder ein Echtzeit-Betriebssystem implementiert ist und gleichzeitig zumindest zwei Echtzeitanwendungen (7,8) mit charakteristischen Echtzeitanforderungen unter dem Echtzeitmodul bzw. unter dem Echtzeit-Betriebssystem aktiv sind, und insbesondere gleichzeitig zu den Echtzeitanwendungen (7,8) zumindest eine Nicht-Echtzeitanwendung (5) aktiv ist, wobei die Echtzeitanforderungen einer jeden Echtzeitanwendung (7,8) nach Maßgabe der betreffenden industriellen Prozesse (1) vorgegeben sind und jeder Echtzeitanwendung (7,8) durch ein auf der Hardware-Plattform (2) ablaufendes und mit einem Einstellmittel Kommunizierendes Zuweisungsmodul (4) ein maximal verfügbarer Anteil (9,10) an einem maximal verfügbaren Echtzeitanteil (11) an einem Betriebszyklus (13) zugewiesen wird.

2. Verfahren nach Anspruch 1, **dadurch gekennzeichnet, dass** eine einstellbare, statische Zuordnung des maximal verfügbaren Anteils (9,10) jeder Echtzeitanwendung (7,8) vorgenommen werden kann.

3. Verfahren nach Anspruch 1 oder 2, **dadurch gekennzeichnet, dass** anhand eines Probedurchlaufs oder mehrerer Probedurchläufe der maximal verfügbare Anteil (9,10) adaptiv ermittelt wird.

4. Verfahren nach einem der Ansprüche 1 bis 3, **dadurch gekennzeichnet, dass** die Zuordnung der Anteile (9,10) während der Laufzeit der Echtzeitanwendungen (7,8) erfolgen kann, insbesondere durch manuelle Eingabe eines Benutzers.

5. Verfahren nach einem der Ansprüche 1 bis 4, **dadurch gekennzeichnet, dass** der maximal verfügbare Anteil (9,10) der Echtzeitanwendungen (7,8) bedarfsgerecht automatisch während der Laufzeit der Echtzeitanwendungen (7,8) dynamisch zugewiesen wird.

6. Verfahren nach einem der Ansprüche 1 bis 5, **dadurch gekennzeichnet, dass** jeweils eine Echtzeitanwendung (7) betreffend SPS-Funktionalität/Teilprozess und eine Echtzeitanwendung (8) betreffend NC-Funktionalität/Teilprozess vorgesehen sind.

7. Verfahren nach einem der Ansprüche 1 bis 6, **dadurch gekennzeichnet, dass** als Standard-Betriebssystem (3) ein hardwaremäßig eingebettetes Betriebssystem vorgesehen ist.

8. Verfahren nach einem der Ansprüche 1 bis 7, **dadurch gekennzeichnet, dass** die Zuweisung der maximal verfügbaren Anteile (9,10) über eine bezüglich der Hardware-Plattform (2) mit dem Ablauf der Echtzeitanwendungen (7,8) separate EDV-Anlage, insbesondere über einen Direktanschluss mittels einer Schnittstelle oder über einen Netzwerkanschluss erfolgt.

9. Verfahren nach einem der Ansprüche 1 bis 7, **dadurch gekennzeichnet, dass** die Betriebszyklen (12) mit einem externen Hardwareereignis synchronisiert sind.

10. Verfahren nach einem der Ansprüche 1 bis 8, **dadurch gekennzeichnet, dass** die maßgeblichen Zeitintervalle (9,10,11,13) und/oder die maßgeblichen Zeitpunkte (15,16,17) für die betreffenden Zyklen (13) und Zyklenanteile (NC, SPS) durch einen Timer, insbesondere einen Betriebssystemtimer, gegeben werden.

11. Verfahren nach Anspruch 9, **dadurch gekennzeichnet, dass** die Zeitintervalle (9,10,11,13) und Zeitpunkte (15,16,17) durch zyklisches Pollen des Timers / Betriebssystemtimers, insbesondere durch Abzählen einer entsprechenden Anzahl von Zeitsignalen, gegeben werden.

## Claims

1. Method for open-loop and/or closed-loop control of industrial processes (1, 20), with a standard operating system (3) with a real-time module or a real-time operating system being implemented on a hardware platform (2) and, at the same time, with at least two real-time applications (7, 8) with characteristic real-time requirements being active under the real-time module or under the real-time operating system, and in particular and at the same time with at least one non-real-time application (5) relating to the real-time applications (7, 8) being active, with the real-time requirements for each real-time application (7, 8) being predetermined on the basis of the relevant industrial processes (1), and with each real-time application (7, 8) being assigned a maximum available proportion (9, 10) of a maximum available real-time component (11) in an operating cycle (13) by an assignment module (4) which runs on the hardware platform (2) and communicates with an adjustment means.

2. Method according to Claim 1, **characterized in that** the maximum available proportion (9, 10) of each real-time application (7, 8) can be allocated adjustably and statically.

3. Method according to Claim 1 or 2, **characterized in that** the maximum available proportion (9, 10) is determined adaptively on the basis of a sample run or a plurality of sample runs.

4. Method according to one of Claims 1 to 3, **characterized in that** the proportions (9, 10) can be allocated during the time in which the real-time applications (7, 8) are running, in particular by means of a manual input by a user.

5. Method according to one of Claims 1 to 4, **characterized in that** the maximum available proportion (9, 10) of the real-time applications (7, 8) is assigned automatically and dynamically, as required, during the time in which the real-time applications (7, 8) are running.

6. Method according to one of Claims 1 to. 5, **characterized in that** a real-time application (7) relating to a PLC functionality/process element, and a real-time application (8) relating to an NC functionality/process element are in each' case provided.

7. Method according to one of Claims 1 to 6, **characterized in that** an operating system embedded in hardware is provided as the standard operating system (3).

8. Method according to one of Claims 1 to 7, **characterized in that** the maximum available components (9, 10) are assigned by a computer system which is separate from the hardware platform (2) with the running of the real-time applications (7, 8), in particular via a direct connection by means of an interface, or via a network connection.

9. Method according to one of Claims 1 to 7, **characterized in that** the operating cycles (12) are synchronized with an external hardware event.

10. Method according to one of Claims 1 to 8, **characterized in that** the governing time intervals (9, 10, 11, 13) and/or the governing times (15, 16, 17) for the relevant cycles (13) and cycle components (NC, PLC) are determined by a timer, in particular an operating system timer.

11. Method according to Claim 9, **characterized in that** the time intervals (9, 10, 11, 13) and times (15, 16, 17) are determined by cyclic polling of the time/operating-system timer, in particular by decrementing an appropriate number of time signals.

## Revendications

1. Procédé de commande et/ou de régulation de processus industriels (1, 20), selon lequel un système d'exploitation standard (3) comportant un module en temps réel ou un système d'exploitation en temps réel est mis en oeuvre sur une plate-forme matérielle (2) et simultanément, au moins deux applications en temps réel (7, 8) comportant des requêtes en temps réel caractéristiques sont actives sous le module de temps réel ou sous le système d'exploitation en temps réel, et notamment en même temps que les applications en temps réel (7, 8) au moins une application qui n'est pas en temps réel (5) est active, sachant que les requêtes en temps réel de chaque application en temps réel (7, 8) sont prédéterminées en fonction des processus industriels concernés (1), et à chaque application en temps réel (7, 8), on affecte par un module d'affectation (4) exécuté sur la plate-forme matérielle (2) et communiquant avec un moyen de réglage, une partie maximale disponible (9, 10) sur une partie en temps réel maximale disponible (11) sur un cycle d'exploitation (13).

2. Procédé selon la revendication 1,
**caractérisé en ce qu'**
on peut réaliser une affectation statique réglable de la partie maximale disponible (9, 10)) à chaque application en temps réel (7, 8).

3. Procédé selon la revendication 1 ou 2,
**caractérisé en ce qu'**
à l'aide d'un passage d'échantillon ou de plusieurs passages d'échantillon, on détermine de manière adaptative la partie maximale disponible (9, 10).

4. Procédé selon l'une des revendications 1 à 3,
**caractérisé en ce que**
l'affectation des parties (9, 10) peut s'effectuer pendant la durée d'exécution des applications en temps réel (7, 8), en particulier par la saisie manuelle d'un utilisateur.

5. Procédé selon l'une des revendications 1 à 4,
**caractérisé en ce que**
la partie maximale disponible (9, 10) est affectée dynamiquement aux applications en temps réel (7, 8), de manière automatique et en fonction du besoin pendant la durée d'exécution des applications en temps réel (7, 8).

6. Procédé selon l'une des revendications 1 à 5,
**caractérisé en ce qu'**
on prévoit respectivement une application en temps réel (7) concernant une fonctionnalité/processus partiel ASC, et une application en temps réel (8) concernant une fonctionnalité/processus partiel NC.

7. Procédé selon l'une des revendications 1 à 6,
**caractérisé en ce qu'**
on prévoit en tant que système d'exploitation standard (3) un système d'exploitation intégré dans le matériel.

8. Procédé selon l'une des revendications 1 à 7,
**caractérisé en ce que**
l'affectation des parties maximales disponibles (9, 10) s'effectue via une installation informatique séparée par rapport à la plate-forme (2) avec l'exécution des applications en temps réel (7, 8), en particulier par une connexion directe au moyen d'une interface, ou par une connexion réseau.

9. Procédé selon l'une des revendications 1 à 7,
**caractérisé en ce que**
les cycles d'exploitation (12) sont synchronisés avec un événement matériel externe.

10. Procédé selon l'une des revendications 1 à 8,
**caractérisé en ce que**
les intervalles de temps déterminants (9, 10, 11, 13) et/ou les instants déterminants (15, 16, 17) pour les cycles (13) et les parties de cycle (NC, ASC) concernés sont indiqués par une horloge, en particulier une horloge du système d'exploitation.

11. Procédé selon la revendication 9,
**caractérisé en ce que**
les intervalles de temps (9, 10, 11, 13) et les instants (15, 16, 17) sont indiqués par une interrogation cyclique de l'horloge/l'horloge du système d'exploitation, en particulier par décomptage d'un nombre correspondant de signaux temporels.
